# EUROPEAN PATENT APPLICATION

(11) **EP 1 964 536 A1**
(43) Date of publication of application: **03.09.2008**
(21) Application number: 07103415.1
(22) Date of filing: 02.03.2007
(51) Int. Cl.: A61G 5/06, B62B 5/02

(54) **A vehicle**

(71) Applicant: Van der Lugt, Wilco, 1821 AE Alkmaar (NL)
(72) Inventor: Van der Lugt, Wilco, 1821 AE Alkmaar (NL)
(74) Representative: Metman, Karel Johannes

(57) **Abstract**

A vehicle (1) for carrying and transporting a load comprises a chassis (3), at least two wheel supports (5, 5') which are rotatably connected to the chassis (3) and spaced from each other in a direction perpendicular to a direction of movement of the vehicle (1). Each of the wheel supports (5, 5') are provided with at least two wheels (6, 6') which are each rotatable about an axis of rotation (7, 7') and connected to the wheel support (5, 5'). The wheels (6, 6') of the wheel support (5, 5') are rotatable about an axis of rotation (8) of the wheel support (5, 5') and one of the wheels (6) of each wheel support (5, 5') forms a ground-engaged front wheel (9) which faces the direction of movement depending on the angular position of the wheel support (5, 5'). A driving means (10) drives the wheels (6, 6') of at least one wheel support (5, 5') via a transmission (11). The vehicle (1) has a non-obstructed transporting condition, and a climbing condition wherein the wheel support (5, 5') rotates about the axis of rotation (7, 7') of the front wheel (9) when this encounters an obstruction. The wheel supports (5, 5') are directly fixed to each other.

## Description

The present invention relates to a vehicle for carrying and transporting a load according to the preamble of claim 1.

Such a vehicle is known from FR 2.050.542 and is suitable for carrying and transporting a load on a flat ground surface as well as in upwards direction in case the front wheels encounter an obstruction, for example a staircase. The prior art vehicle has two wheel supports at both sides of the chassis. Each of the wheel supports comprises three wheels which are disposed equidistantly with respect to each other in circumferential direction about an axis of rotation of the wheel support. The wheels are coupled to each other via a chain and one of the wheels of both wheel supports is driven through a central shaft and chains. A first part of the central shaft is driven by an electric motor, whereas the other part is driven by the first part via a differential gear. It appears that the prior art vehicle is difficult to operate and may become unstable under certain conditions, which may lead to dangerous situations in the case of climbing a stairs, for example.

The present invention aims to provide an improved vehicle.

For this purpose the wheel supports are directly fixed to each other.

The advantage of this feature is that, if the front wheel of the wheel support of which the wheels are driven encounters an obstruction when moving in the direction of movement and the wheel support starts to rotate about the axis of rotation of the front wheel, the other wheel support will be rotated automatically, as well. This means that both wheel supports will be rotated and lifted synchronously, which surprisingly facilitates the operation of the vehicle. Besides, a differential gear which might couple the wheels of both wheel supports is not necessary, which makes the vehicle relatively light and low cost.

In a practical embodiment the wheel supports are fixed to each other by a coupling element, which is rotatably connected to the chassis. In this case the chassis is located between the wheel supports such that the coupling member may extend through the chassis. The coupling member may have different shapes; a simple embodiment is a circular pipe which is rotatably mounted in the chassis and which has a centre line which coincides with the axis of rotation of the wheel supports.

The transmission may be adapted such that the driving means drives the wheels of only one wheel support. This embodiment is possible since the other wheel support is rotated and lifted synchronously with the wheel support of which the wheels are drivable. The advantage is that the vehicle is relatively simple and light. Besides, it facilitates to follow a curved path with the vehicle.

In an advantageous embodiment the transmission is provided with at least a driving shaft which is rotatably connected to the chassis, and a flexible endless driving member, which is in engagement with both a driving element fixed to the driving shaft and driving elements fixed to the wheels of the wheel support. The driving shaft is coupled with the driving means and may be an output shaft of the driving means, for example of an electric motor. In this case only one flexible endless driving member is applied for driving all the wheels together, which simplifies the transmission with respect to a transmission which includes, for example, one flexible endless driving member for coupling the wheels to each other and a second flexible endless driving member for driving one of these wheels via the drive shaft.

The flexible endless driving member may be at least a chain, wherein the driving elements are chain gear wheels engaged with the chain. Of course, more than one parallel chains and chain gear wheels may be applied for achieving a more robust transmission, depending on the field of use of the vehicle.

Preferably, the driving shaft is located at a distance from the axis of rotation of the wheel support beyond the path of the driving elements of the wheels which is followed when the wheel support is rotated, as seen in radial direction from the axis of rotation of the wheel support. This embodiment avoids that a large part of the transmission is concentrated at the wheel support such that assembly and maintenance of the vehicle is facilitated.

A tensioner may be provided to tighten the flexible endless driving member. This is particularly advantageous if the driving elements of the wheels are spaced over a relatively wide angle about the axis of rotation of the wheel support, because the length of the flexible endless driving member between the wheel support and the driving shaft may vary significantly during rotation of the wheel support in that case.

In an alternative embodiment the wheels of both wheel supports are drivable, and the wheels of one wheel support are drivable separately from the wheels of the other wheel support. This embodiment is advantageous if the vehicle is used on slippery floors, for example.

Preferably, the transmission comprises a switching member for coupling the driving means to the wheels of one or the other wheel support, because in that case only one driving means, for example an electric motor, can be applied. The embodiment enables the user to switch between driving the wheels of one or the other wheel support, for example if the wheels of one of those rest on a slippery floor.

In a simple embodiment the switching member is provided on the driving shaft such that the driving shaft can be coupled and de-coupled with one of the flexible endless driving members.

The vehicle may be a trolley and the chassis is provided with a lifting mechanism for lifting a load. Such a trolley provides the opportunity to lift, carry and transport loads over a flat floor surface as well as over obstructions, such as a stairs. A further advantage of the presence of the lifting mechanism is that, for example in the case of a trolley including two wheel supports, a load can be lifted to a certain distance above ground level, which facilitates the operation of the trolley. On the one hand the centre of gravity is higher which enables the user to easily tilt the trolley to bring the centre of gravity over the ground-engaged wheels, on the other hand it simplifies to turn when climbing a stairs if the trolley carries a large size load so as to avoid collision with side walls.

In a specific embodiment of the vehicle a flexible endless driving element may be in engagement with the outer circumference of the wheels of the wheel support. Due to this feature the supporting surface of the vehicle on the ground surface is increased, which minimizes the risk of slip between the endless driving element and the ground surface. In a practical embodiment the flexible endless driving element comprises a caterpillar track and the wheels are adapted to engage with the caterpillar track. In this case the caterpillar track is arranged around the wheels of a wheel support, hence forming a caterpillar drive.

The invention will hereafter be elucidated with reference to the drawings showing embodiments of the invention by way of example.

Fig. 1 is a front view of an embodiment of the vehicle according to the invention.

Fig. 2 is a side view of the embodiment of Fig. 1.

Fig. 3 is a similar view as Fig. 2 of the opposite side of the embodiment.

Fig. 4 is a rear view of the embodiment of Fig. 1.

Fig. 5 is a detailed view of a part of Fig. 4 indicated by V on a larger scale.

Fig. 6 is a detailed view of a part of Fig. 3 indicated by VI on a larger scale, showing a part of the embodiment including a chain.

Fig. 7 is a perspective rear view of the part of the embodiment such as shown Fig. 5.

Fig. 8 is a similar view as Fig. 5 of an alternative embodiment of the vehicle according to the invention.

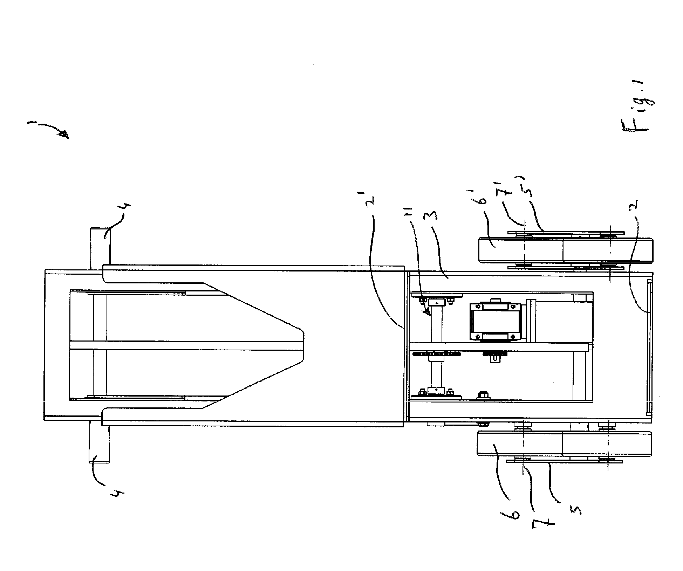

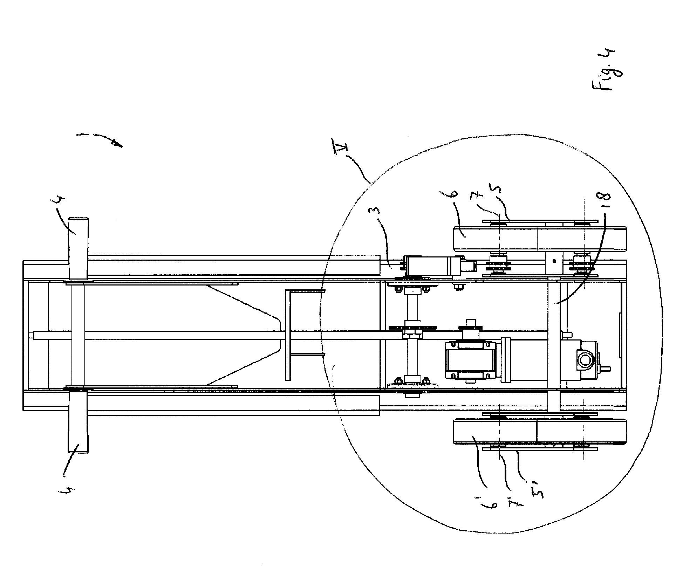

Fig. 1-7 show different views of an embodiment of the vehicle according to the invention. This embodiment is a trolley 1 for carrying and transporting a load. The load can be placed on a load carrier 2, which can be lifted by a lifting mechanism (not shown), such as illustrated by 2' in Fig. 1 - 3.

The embodiment comprises a chassis 3. This is preferably made of a rigid material, such as steel, but other materials such as plastic or reinforced plastic or the like are conceivable. Furthermore, it is possible to make the chassis partly or entirely of one piece, for example by folding a metal plate. The chassis 3 is provided with handgrips 4 for guiding the trolley 1. The handgrips 4 may be mounted on the chassis 3 such that their position with respect to the chassis 3 is adjustable. This enables the operator of the trolley 1 to locate the handgrips 4 in a comfortable position, for example corresponding to the physical height of the operator.

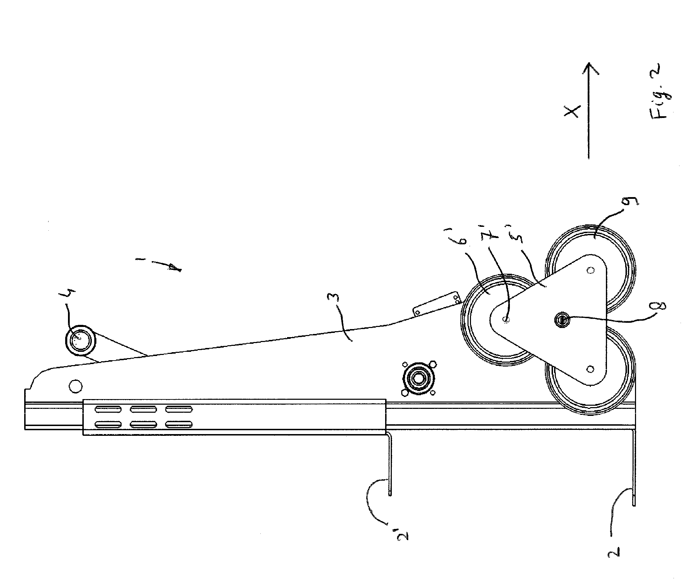

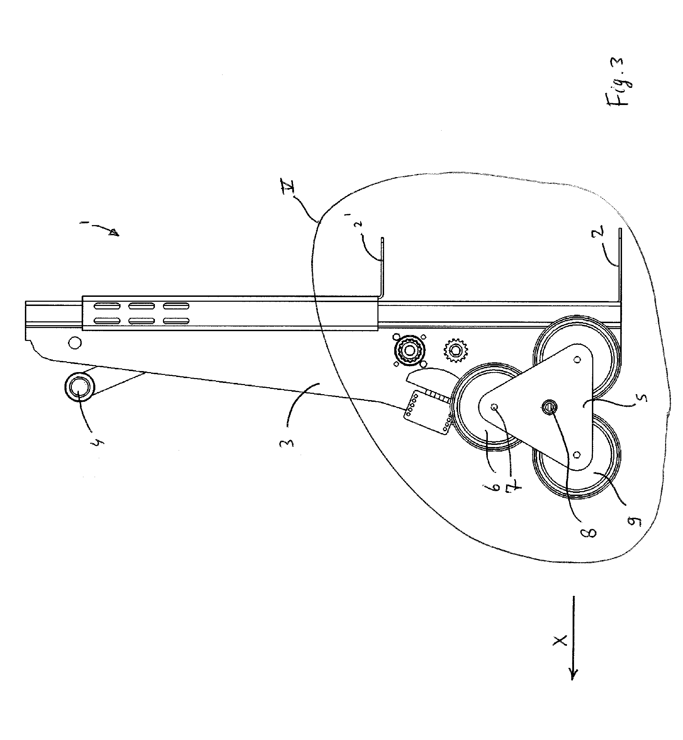

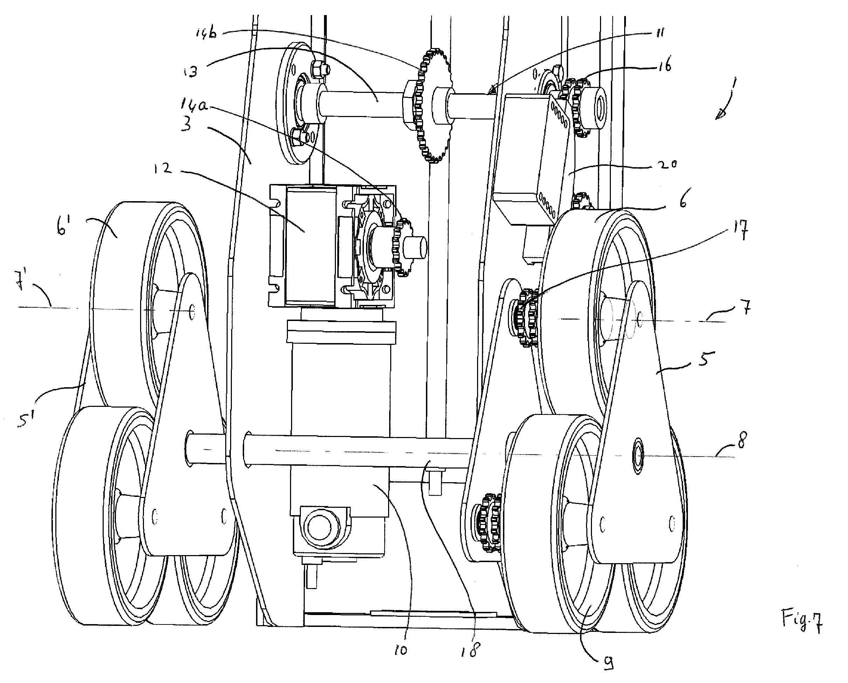

The trolley 1 is provided with two wheel supports 5, 5' which are rotatably connected to the chassis 3. The wheel supports 5, 5' are spaced from each other in a direction perpendicular to a direction of movement of the trolley 1. The wheel supports 5, 5' are shown as parallel triangular plates between which the wheels 6, 6' are disposed, see Fig. 7. It may be clear that several alternative shapes are conceivable. In practice, the normal direction of movement of the trolley 1 is backwards of the trolley 1 since this appears to be most comfortable for the operator of the trolley 1, but a movement in opposite direction is also possible, in particular when operating the trolley 1 on a flat ground surface. The backward direction is defined as the direction as seen from the load carrier 2 to the place of the operator of the trolley 1; the backward direction is indicated by an arrow X in Fig. 2 and 3.

Each of the wheel supports 5, 5' is provided with three wheels 6, 6'. The wheels 6, 6' are rotatable about an axis of rotation 7, 7' and connected to the wheel supports 5, 5'. The axes of rotation 7, 7' of the wheels 6, 6' are spaced from an axis of rotation 8 of the wheel support 5, 5'. The axes of rotation 7, 7' of the wheels 6, 6' are located equidistantly in circumferential direction about the axis of rotation 8 of the wheel supports 5, 5'. This means that the wheels 6, 6' of the wheel supports 5, 5' are rotatable about the axis of rotation 8 of each of the wheel supports 5, 5'.

Depending on the angular position of the wheel support 5, 5' with respect to the chassis 3, one of the wheels 6, 6' of the wheel support 5, 5' forms a ground-engaged front wheel 9, 9'. The front wheel 9, 9' faces the direction of movement, such as illustrated in Fig. 2 and 3.

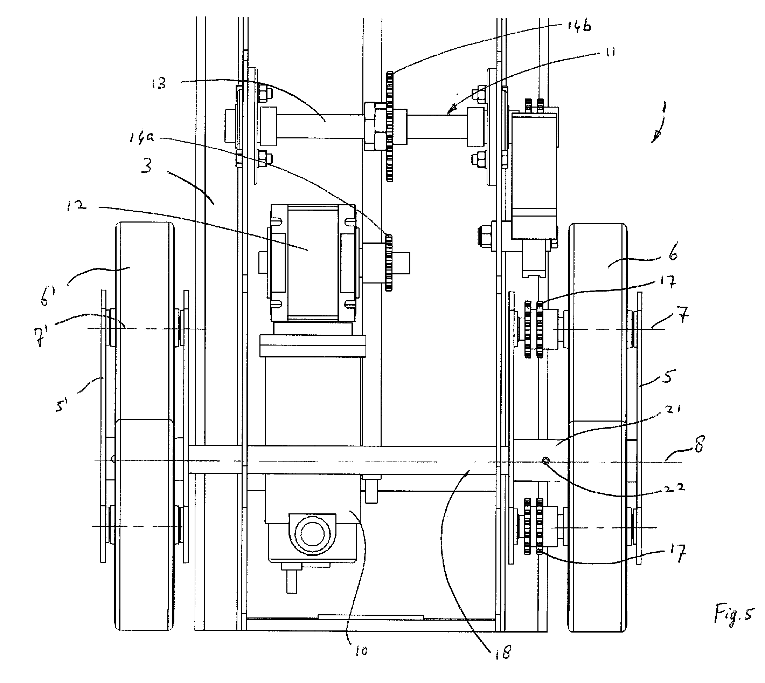

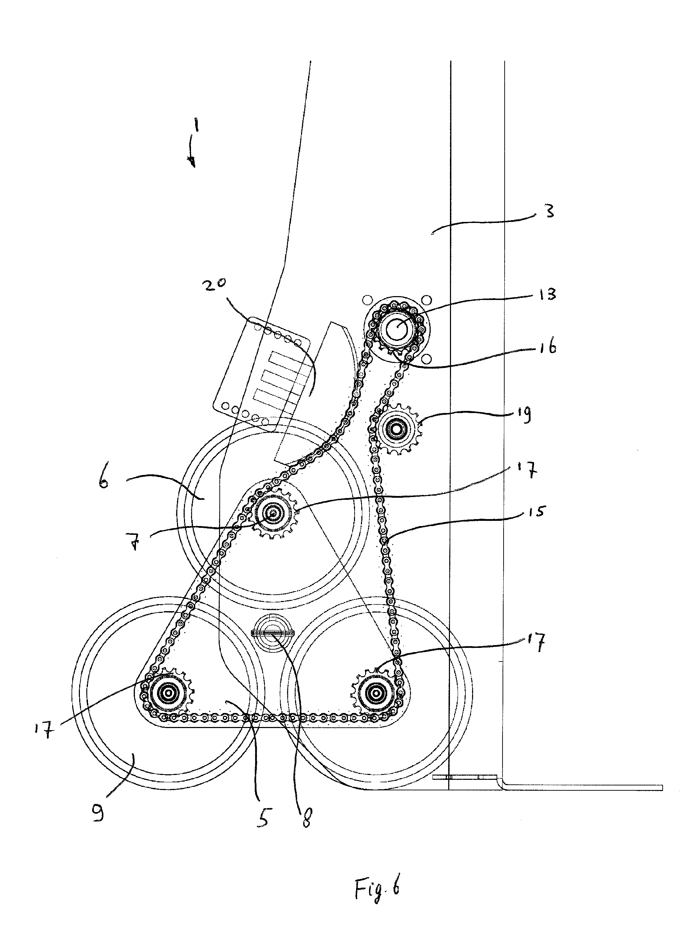

In this embodiment the wheels 6 of only one wheel support 5 are driven by a driving means, which is an electric motor 10 in this case, via a transmission 11, see Fig. 5. The transmission 11 is provided with a gearbox 12, a driving shaft 13 which is rotatably connected to the chassis 3, a chain (not shown) which is in engagement with a chain gear wheel 14a fixed on a driven output shaft of the gearbox 12 and a chain gear wheel 14b fixed on the driving shaft 13, and a flexible endless driving member in the form of a chain 15 (only illustrated in Fig. 6). The chain 15 is in engagement with both a chain gear wheel 16 fixed to the driving shaft 13 and chain gear wheels 17 fixed to the wheels 6 of the wheel support 5. It is noted that a (reinforced) endless belt, or the like, may be applied instead of a chain. Furthermore, the transmission 11 may be arranged in a different way. The electric motor 10 may directly drive the driving shaft 13, for example, such that the gearbox 12, the chain gear wheels 14a, 14b and the chain engaging the wheels 14a, 14b may be eliminated.

The wheel supports 5, 5' are directly fixed to each other by a coupling element 18, which is rotatably connected to the chassis 3. In this embodiment the coupling element 18 comprises a tubular pipe which is fixed to both wheel supports 5, 5' by sleeves 21 which are fixed to the wheel supports 5, 5' and are shifted over the pipe in axial direction thereof and fixed thereto by fixing elements 22, for example bolts or the like.

The trolley 1 has a non-obstructed transporting condition wherein the wheels 6 of the wheel support 5 are driven in a similar direction of rotation. The non-driven ground-engaged wheels 6' will rotate in similar direction. In this condition the trolley 1 can transport a load over a substantially flat ground surface. The trolley 1 also has a climbing condition wherein each wheel support 5, 5' rotates about the axis of rotation 7, 7' of the front wheel 9, 9' when this encounters an obstruction. In this condition the front wheel 9, 9' of each wheel support 5, 5' is hold in its place against the obstruction. The chain 15 will not rotate the front wheel 9 in this condition because of the obstruction. When looking to Fig. 6 it may be clear that the other two wheels 6 of the wheel support 5 are not rotated either about their respective axes of rotation 7 with respect to the wheel support 5 by the chain 15. However, the electric motor 10 keeps on running in the same rotational direction. This means that the chain 15 will rotate the entire wheel support 5 associated with the driven wheels 6 about the axis of rotation 7 of the front wheel 9, whereas at the same time the wheel support 5 is rotated about the axis of rotation 8. Due to the coupling member 18 the wheel support 5' at the other side of the chassis 3 is rotated synchronously with the wheel support 5. Due to the rotational movement of the wheel supports 5, 5' about the axes of rotation 7, 7' of the front wheels 9, 9' and the associated rotation of the wheel supports 5, 5' about the axis of rotation 8, the chassis 3 is moved upwardly. In this way it is possible, for example, to easily ascend a stairs with a loaded trolley 1.

Climbing a stairs with a loaded trolley 1 can be further simplified by lifting the load on the load carrier 2 with the lifting mechanism, such that the centre of gravity of the trolley 1 including the load is raised. This enables the user, who is behind the trolley 1 and climbs the stairs backwardly, to easily tilt the trolley 1 in the direction of his body, such that the centre of gravity is substantially over the ground-engaged wheels 6, 6'. Besides, when the load is lifted it may be easier to follow a curve of the stairs without colliding with side walls of the staircase if the load has a certain shape and size, for example a large-size rectangular box.

It is noted that the trolley 1 can also be used in reverse direction so as to descend a stairs or to move over a flat ground surface, for example. In particular when descending a stairs adjustable handgrips 4 appear to be comfortable since the operator may locate them at a relatively high position with respect to the chassis 3 such that he can maintain a comfortable upright body position.

The driving shaft 13 is located at a distance from the axis of rotation 8 of the wheel support 5 beyond the path of the chain gear wheels 17 of the wheels 6, which path is followed when the wheel support 5 is rotated about the axis of rotation 8, as seen in radial direction from the axis of rotation 8 of the wheel support 5.

Fig. 6 shows that a portion of the chain 15 between the chain gear wheels 17 on the wheel support 5 and the chain gear wheel 16 is guided along a chain gear wheel 19 and a tensioner 20. The chain gear wheel 19 is rotatably fixed to the chassis 3, whereas the tensioner 20 is resiliently connected to the chassis 3 to tighten the chain 15. The chain gear wheel 19 serves to create a wide engaging angle between the chain 15 and the adjacent chain gear wheel 17, such as shown in Fig. 6. The tensioner 20 serves to tighten the chain 15 since the length of a portion of the chain 15 between the wheel support 5 and the driving shaft 13 varies during rotation of the wheel support 5. The tensioner 20 may be made of plastic or the like.

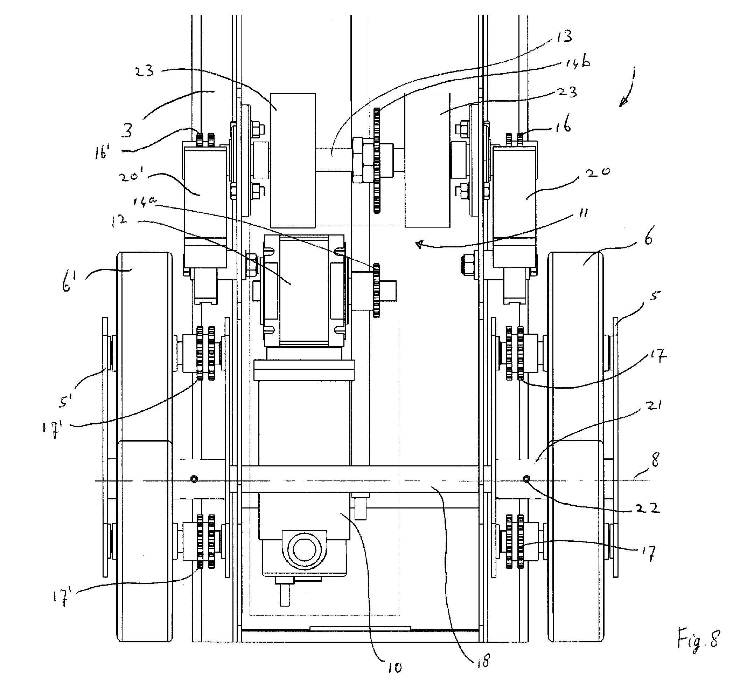

Fig. 8 shows a part of an alternative embodiment of the trolley 1. In this embodiment both wheel supports 5, 5' are drivable since they are each provided with wheels 6, 6' including chain gear wheels 17, 17'. At both sides of the chassis 3 a chain 15, 15' (not shown in Fig. 8), a tensioner 20, 20' and a chain gear wheel 19, 19' (not visible in Fig. 8) are provided. The driving shaft 13 includes two chain gear wheels 16, 16' at the axial end portions thereof. The wheels 6 of the wheel support 5 are drivable separately from the wheels 6' of the other wheel support 5' by means of a switching member 23 for coupling and de-coupling the driving shaft 13 with one of the chains 15, 15'. The switching member 23 may be manually operated or it may be an electromagnetic coupling, for example. Preferably, the trolley 1 is provided with a switch control (not shown) to operate the switching member 23, which switch control is preferably mounted on the chassis 3 near the handgrips 4. Furthermore, it is possible that the wheels 6 of the wheel support 5 are drivable by a separate electric motor, and the wheels 6' of the wheel support 5' are drivable by another separate electric motor.

From the foregoing, it will be clear that the invention provides a vehicle which is simple to operate and which provides the opportunity to transport a load upwardly in a stable and safe way.

The invention is not limited to the embodiment shown in the drawings and described hereinbefore, which may be varied in different manners within the scope of the claims and their technical equivalents. For example, the wheel supports may be located and mounted on the chassis at an inner side thereof, such that the coupling element between the wheel supports is not in contact with the chassis. It is also possible that a wheel support comprises more than three wheels. Furthermore, the vehicle according to the invention can have several other embodiments than a trolley, for example in the field of devices for transport of elderly or disabled persons, such as wheel chairs, or the like. All kinds of vehicles which are meant for movement over rough terrain are conceivable, as well. In order to improve the support surface of the trolley on the ground surface a caterpillar track can be arranged around the wheels of the wheel support.

## Claims

1. A vehicle (1) for carrying and transporting a load, comprising a chassis (3), at least two wheel supports (5, 5') which are rotatably connected to the chassis (3) and spaced from each other in a direction perpendicular to a direction of movement (X) of the vehicle (1), each of said wheel supports (5, 5') being provided with at least two wheels (6, 6') which are each rotatable about an axis of rotation (7, 7') and connected to said wheel support (5, 5'), wherein the axes of rotation (7, 7') of the wheels (6, 6') are spaced from an axis of rotation (8) of the wheel support (5, 5') such that the wheels (6, 6') of the wheel support (5, 5') are rotatable about the axis of rotation (8) of the wheel support (5, 5'), wherein one of the wheels (6) of each wheel support (5, 5') forms a ground-engaged front wheel (9) facing the direction of movement (X) depending on the angular position of the wheel support (5, 5') with respect to the chassis (3), a driving means (10) for driving the wheels (6, 6') of at least one wheel support (5, 5') via a transmission (11), wherein the vehicle (1) has a non-obstructed transporting condition wherein the wheels (6, 6') of said at least one wheel support (5, 5') are driven in a similar direction of rotation, and a climbing condition wherein said wheel support (5, 5') rotates about the axis of rotation (7, 7') of the front wheel (9) when this encounters an obstruction, **characterized in that** the wheel supports (5, 5') are directly fixed to each other.

2. A vehicle (1) according to claim 1, wherein the wheel supports (5, 5') are fixed to each other by a coupling element (18), which is rotatably connected to the chassis (3).

3. A vehicle (1) according to claim 1 or 2, wherein the transmission (11) is adapted such that the driving means (10) drives the wheels (6) of only one wheel support (5).

4. A vehicle (1) according to one of the preceding claims, wherein the transmission (11) is provided with at least a driving shaft (13) which is rotatably connected to the chassis (3), and a flexible endless driving member (15, 15'), which is in engagement with both a driving element (16, 16') fixed to the driving shaft (13) and driving elements (17, 17') fixed to the wheels (6, 6') of the wheel support (5, 5').

5. A vehicle (1) according to claim 4, wherein the flexible endless driving member is at least a chain (15, 15'), and the driving elements are chain gear wheels (16, 16', 17, 17') engaged with the chain (15, 15').

6. A vehicle (1) according to claim 4 or 5, wherein the driving shaft (13) is located at a distance from the axis of rotation (8) of the wheel support (5, 5') beyond the path of the driving elements (17, 17') of the wheels (6, 6') which is followed when the wheel support (5, 5') is rotated, as seen in radial direction from the axis of rotation (8) of the wheel support (5, 5').

7. A vehicle (1) according to one of the claims 4-6, wherein a tensioner (20, 20') is provided to tighten the flexible endless driving member (15, 15').

8. A vehicle (1) according to one of the claims 1-3, wherein the wheels (6) of both wheel supports (5, 5') are drivable, and the wheels (6) of one wheel support (5, 5') are drivable separately from the wheels (6) of the other wheel support (5, 5').

9. A vehicle (1) according to claim 8, wherein the transmission comprises a switching member (23) for coupling the driving means (10) to the wheels (6) of one or the other wheel support (5, 5').

10. A vehicle (1) according to claims 4 and 9, wherein the switching member (23) is provided on the driving shaft (13) such that the driving shaft (13) can be coupled and de-coupled with one of the flexible endless driving members (15, 15').

11. A vehicle (1) according to one of the preceding claims, wherein each wheel support (5, 5') includes three wheels (6, 6'), which are equidistantly located in circumferential direction of the axis of rotation (8) of the wheel support (5, 5').

12. A vehicle according to one of the preceding claims, wherein the vehicle is a trolley (1) and the chassis (3) is provided with a lifting mechanism for lifting a load.

13. A vehicle according to one of the preceding claims, wherein a flexible endless driving element is in engagement with the outer circumference of the wheels (6, 6') of the wheel support (5, 5').

14. A vehicle according to claim 13, wherein the flexible endless driving element comprises a caterpillar track and the wheels (6, 6') are adapted to engage with the caterpillar track.
